# EUROPÄISCHE PATENTSCHRIFT

(11) **EP 3 781 813 B1**
(45) Veröffentlichungstag und Bekanntmachung des Hinweises auf die Patenterteilung: **07.06.2023**
(21) Anmeldenummer: 19721212.9
(22) Anmeldetag: 16.04.2019
(51) Int. Cl.: F03G 7/06

(54) **AKTOR MIT EINEM AKTORELEMENT AUS EINER FORMGEDÄCHTNISLEGIERUNG**
ACTUATOR COMPRISING AN ACTUATOR ELEMENT MADE OF A SHAPE-MEMORY ALLOY
ACTIONNEUR DOTÉ D'UN ÉLÉMENT ACTIONNEUR COMPOSÉ D'ALLIAGE À MÉMOIRE DE FORME

(30) Priorität: 18.04.2018 DE 102018109228
(43) Veröffentlichungstag der Anmeldung: 24.02.2021
(73) Patentinhaber: Universität Kassel, 34125 Kassel (DE)
(72) Erfinder: NIENDORF, Thomas, 34119 Kassel (DE); KROOSS, Philipp, 34379 Calden-Ehrsten (DE); GIESEN, Ralf Urs, 34323 Malsfeld (DE); KLIER, Kevin, 34323 Malsfeld (DE); HARTUNG, Michael, 34593 Knüllwald (DE); HEIM, Hans-Peter, 33332 Gütersloh (DE); SAUER, Viola, 34117 Kassel (DE); FEHLING, Ekkehard, 34346 Hann. Münden (DE); SEIM, Werner, 34130 Kassel (DE); MIDDENDORF, Bernhard, 34379 Calden (DE); WETZEL, Alexander, 34302 Guxhagen (DE)
(74) Vertreter: Walther Bayer Faber Patentanwälte PartGmbB
(86) Internationale Anmeldenummer: PCT/EP2019/059745
(87) Internationale Veröffentlichungsnummer: WO 2019/201890

(56) Entgegenhaltungen:
- EP-A2- 2 960 497
- DE-A1- 10 314 216
- DE-A1-102011 112 290
- DE-U1-202004 020 706

## Beschreibung

Die Erfindung betrifft einen thermisch wirksamen Aktor mit einem Aktorelement aus einer metallischen Formgedächtnislegierung, sodass das Aktorelement bei einer Temperaturänderung eine Gestaltänderung ausführt, wobei wenigstens ein Rückstellmittel aus einem Elastomer vorgesehen ist, mit dem die Gestaltänderung rückstellbar ist, wobei das Rückstellmittel mit dem Aktorelement über einen Oberflächenkontakt verbunden ist. Die Erfindung betrifft weiterhin ein Verfahren zur Herstellung eines solchen thermisch wirksamen Aktors.

### STAND DER TECHNIK

Die DE 10 2014 107 821 A1 offenbart einen thermisch wirksamen Aktor mit einem Aktorelement aus einer Formgedächtnislegierung, sodass das Aktorelement bei einer Temperaturänderung eine Gestaltänderung ausführt. Dabei ist ein Rückstellmittel auf der Oberfläche des Aktorelementes aufgebracht, und bildet eine rückstellkrafterzeugende Schicht. Dabei wird vorgeschlagen, dass die rückstellkrafterzeugende Schicht aus einem Metall oder aus einer Metalllegierung ausgebildet wird, und das Aktorelement und die rückstellkrafterzeugende Schicht weisen eine im Wesentlichen flächige, blechartige Erstreckung auf, sodass der thermisch wirksame Aktor in Form eines Bi-Metalles technisch vorteilhaft genutzt werden kann. Insbesondere wird vorgeschlagen, eine wärmeerzeugende Schicht in Form einer elektrischen Widerstandsheizung in einen Schichtaufbau aus dem Aktorelement und der rückstellkrafterzeugenden Schicht zu integrieren. Nachteilhafterweise sind mit dem damit bekannt gewordenen thermisch wirksamen Aktor nur kleine Stellwege möglich, insbesondere darf das Metall oder die Metalllegierung zur Bildung der rückstellkrafterzeugenden Schicht nicht derart plastisch verformt werden, dass eine Gestaltänderung nicht mehr rückführbar wäre. Wünschenswert wäre jedoch die Weiterbildung eines thermisch wirksamen Aktors mit großen Umformgraden in der Gestaltänderung, und ein deformiertes Aktorelement sollte bei entsprechender Wärmezufuhr die in das Aktorelement eintrainierte Gestalt wieder annehmen können, und bei einer Wärmeabfuhr sollte durch das Rückstellmittel die geänderte Gestalt wieder angenommen werden.

Derartige thermisch wirksame Aktoren besitzen einen Zweiwege-Effekt, wobei sowohl die erste Gestalt als auch die zweite Gestalt der Gestaltänderung jeweils intrinsisch erreicht werden kann, also ohne Anwendung einer äußeren Kraft. Eine deutliche Vergrößerung des möglichen Gestaltänderungsgrades und damit des Stellweges eines Aktors mit einem Aktorelement aus einer Formgedächtnislegierung und einem applizierten Rückstellmittel mit insgesamt intrinsischer Wirkungsweise wäre daher wünschenswert.

Aus der US 2016/0017870 A1 ist ein thermisch wirksamer Aktor mit einem Aktorelement aus einem Polymer- Formgedächtniswerkstoff bekannt, und das Aktorelement führt bei einer Temperaturänderung intrinsisch eine Gestaltänderung aus, wobei ein Rückstellmittel aus einem Elastomerkörper an einer Oberfläche des Aktorelementes angeklebt oder mittels einem Bondverfahren angebunden ist, wobei mit dem Rückstellmittel die Gestaltänderung rückstellbar ist, sodass der thermisch wirksame Aktor einen Zweiwege-Effekt aufweist. Die Dicke des Elastomerkörpers gleicht dabei etwa der Dicke des Aktorelementes, da nur dann ein Klebe- oder Bondverfahren technisch umgesetzt und wirtschaftlich ausgeführt werden kann.

Die DE 103 14 216 A1 offenbart eine Aktoreinrichtung mit einem Aktorelement aus einem Memory-Metall, das zumindest in einem Teilbereich mit einer Isolation versehen ist, wobei die Isolation aus einer Umhüllung besteht, deren Dicke unter 100 µm liegt und die aus einem thermoplastischen Isolationsmaterial besteht. Zweck dieser Isolierung sind dabei eine hohe Beständigkeit gegenüber Umwelteinflüssen sowie eine elektrische Isolierung, wobei das Aktorelement nicht in seiner Formänderung durch die Isolation beeinträchtigt werden soll.

Die DE 20 2004 020 706 U1 offenbart einen Aktor mit einem Aktorelement aus einer metallischen Formgedächtnislegierung, wobei ein Rückstellmittel aus einem Elastomerkörper mit dem Aktorelement über einen Oberflächenkontakt verbunden ist. Das Aktorelement ist als Draht mit einem kreisrunden Querschnitt ausgebildet, und der Durchmesser der Ummantelung aus dem Elastomerkörper ist mit 1 mm angegeben. Die Ummantelung des Drahtes wird hergestellt, indem der Draht zentrisch in eine Aluminiumform gespannt wird. Die Form wird sodann mit Silikonharz zur Bildung des Elastomerkörpers aufgefüllt. Die Aushärtung des Harzes erfolgt bei Raumtemperatur über 24 Stunden.

Eine Herstellung von Aktoren mit einer metallischen

Formgedächtnislegierung in größeren Mengen und damit in einem industriellen Maßstab, beispielsweise in einem kontinuierlichen Herstellungsverfahren, ist mit den bislang bekannten Verfahren nicht möglich.

### OFFENBARUNG DER ERFINDUNG

Aufgabe der Erfindung ist die Weiterbildung eines thermisch wirksamen Aktors mit einem Aktorelement und mit einem Rückstellmittel, der für beide Gestaltänderungen sowohl in eine erste Gestalt als auch in eine zweite Gestalt intrinsisch wirken kann und wobei die Gestaltänderung hohe Umformgrade aufweisen soll. Weiterhin soll der thermisch wirksame Aktor und insbesondere das applizierte Rückstellmittel besonders einfach ausgeführt und herstellbar sein.

Diese Aufgabe wird ausgehend von einem thermisch wirksamen Aktor gemäß dem Oberbegriff des Anspruches 1 und ausgehend von einem Verfahren zur Herstellung eines solchen thermisch wirksamen Aktors gemäß dem Oberbegriff des Anspruches 8 mit den jeweils kennzeichnenden Merkmalen der Ansprüche 1 und 8 gelöst. Vorteilhafte Weiterbildungen der Erfindung sind in den abhängigen Ansprüchen angegeben.

Die Erfindung schließt die technische Lehre ein, dass das Rückstellmittel als eine Oberflächenbeschichtung des Aktorelementes ausgeführt ist und eine Schichtdicke von 5µm bis 800µm aufweist, wobei die Dicke des Aktorelementes das Zweifache bis Zehnfache der Schichtdicke beträgt.

Kerngedanke der Erfindung ist die einfache Ausbildung eines Rückstellmittels als eine nur wenige Mikrometer dicke Beschichtung auf wenigstens einer Teiloberfläche des Aktorelementes im Sinne des Einweg-IZweiweg-Effektes. Die Schicht kann aufgrund ihrer sehr geringen Dicke einfach aufgebracht werden, und mit einem Elastomer auf einfache Weise bereitgestellt werden. Das Elastomer hat dabei die vorteilhaften Eigenschaften gut erzeugbarer Rückstellkräfte.

Die Schichtdicke beträgt vorzugsweise 20µm bis 500µm oder 30µm bis 250µm oder 40µm bis 150µm oder 50µm bis 100µm oder 60µm bis 80µm. Mit noch größerem Vorteil beträgt die die Schichtdicke 65µm bis 75µm oder als bevorzugteste Variante 70µm. Mit der sehr geringen Schichtdicke im Maßstab einer Oberflächenbeschichtung lässt sich die Elastomerbeschichtung leicht in einem kontinuierlichen Prozess herstellen, beispielsweise mit einem Streichverfahren oder mit einem Tauchverfahren.

Ein besonders bevorzugtes Verfahren sieht vor, dass die Schicht aus dem Elastomer auf der Oberfläche des Aktorelementes mittels einer Sprüheinrichtung im Sprühverfahren aufgebracht und anschließend ausgehärtet wird. Insbesondere im Sprühverfahren kann die Beschichtung im kontinuierlichen Prozess aufgebracht werden, beispielsweise indem ein Draht oder ein Blechstreifen aus Formgedächtnislegierung an einer Sprüheinrichtung vorbei bewegt wird.

Untersuchungen von neuerlich hergestellten Aktoren mit einem metallischen Aktorelement aus einer Formgedächtnislegierung und mit einer Beschichtung aus einem Elastomer, beispielsweise aus einem Silikon, auf der Oberfläche des Aktorelementes mit sehr geringen Dicken haben überraschend gezeigt, dass beide Gestaltänderungen sowohl in eine erste Gestalt als auch in eine rückführende zweite Gestalt annähernd gleich gut intrinsisch wirken können und wobei die Gestaltänderungen hohe Umformgrade aufweisen können, obwohl die Schichtdicke beispielweise unter 100µm beträgt, zum Beispiel 70µm. Das Aktorelement weist beispielsweise einen Drahtdurchmesser oder eine Blechdicke von 200µm auf.

Wenn das Aktorelement durch eine Wärmezufuhr in seinen antrainierten Zustand zurückgeführt wird, baut sich im Elastomer eine Spannung auf. Das Spannungsverhalten im Elastomer wird dadurch erzeugt, dass das Elastomer auf das Aktorelement aufgebracht wird, wenn sich dieses im deformierten Zustand befindet, der durch eine Gestalt gebildet ist, die eben nicht der antrainierten Gestalt des Aktorelementes entspricht. Wird das Aktorelement erwärmt und nimmt dieses die antrainierte Gestalt wieder an, so baut sich im Elastomer eine Rückstellkraft auf, sodass bei einer Abkühlung des Aktorelementes dieses die geänderte Gestalt wieder annimmt. Damit kann auf einfache Weise ein thermisch wirksamer Aktor basierend auf einer Formgedächtnislegierung mit einem Zweiwege-Effekt bereitgestellt werden, und die Gestaltänderung kann erzeugt werden zwischen einer ersten Gestalt, die der antrainierten Gestalt des Aktorelementes entspricht, und einer zweiten Gestalt, die sich ergibt durch eine entsprechende Kraftbeaufschlagung des thermisch wirksamen Aktors. Das Überführen des Aktors in die zweite Gestalt, die eben nicht der antrainierten Gestalt entspricht, erfolgt nach entsprechender Abkühlung des Aktorelementes auf eine niedrigere Temperatur als die Temperatur, in der das Aktorelement die antrainierte Gestalt annimmt. Die Rückstellkraft wird durch die elastischen Eigenschaften des Elastomers erzeugt, das als Schicht auf wenigstens einer Teiloberfläche des Aktorelementes aufgebracht ist.

Mit besonderem Vorteil ist das Elastomer durch ein Silikon gebildet. Silikone bieten den Vorteil, dass diese thermisch stabil sind und ein gutes elastisches Rückstellverhalten aufweisen. Weiterhin sind Silikone gut verarbeitbar und können auf einfache Weise auf die Oberfläche des Aktorelementes aufgebracht werden. Insbesondere lassen sich Silikone sehr vorteilhaft in einem Sprühverfahren, in einem Streichverfahren oder in einem Tauchverfahren auf der Oberfläche des Aktorelementes aufbringen. Darüber hinaus ist das elastische Verhalten von Silikonen im Wesentlichen temperaturunabhängig. Damit eignet sich ein Silikon insbesondere zur Bildung des Rückstellmittels als Schicht auf der Oberfläche des Aktorelementes.

Im Rahmen der Erfindung kann der thermisch wirksame Aktor ein Aktorelement umfassen, das jede mögliche geometrische Gestalt aufweisen kann. Zur Erzeugung eines möglichst großen Aktorstellweges des Aktors kann das Aktorelement beispielsweise durch einen Draht gebildet sein, der aus einer Formgedächtnislegierung ausgebildet ist, und das Elastomer ist auf den Draht beispielsweise vollumfänglich aufgebracht und ummantelt diesen. Insbesondere kann der Draht zu einer Spiralfeder oder dergleichen geformt sein, um einen möglichst großen Aktorstellweg zu erreichen.

Alternativ kann das Aktorelement ein Blechelement sein, wobei das Elastomer auf wenigstens einer der Oberflächen des Blechelementes aufgebracht ist.

Der Faktor zwischen der Dicke der Schicht und dem Durchmesser oder der Dicke des Aktorelementes beträgt beispielsweise den Wert 2 bis 10, mit dem das Aktorelement größere Dickenabmessungen aufweist als die Elastomerschicht.

Das Aktorelement weist eine Formgedächtnislegierung auf, die beispielsweise auf einem Eisenwerkstoff undloder auf einem Kupferwerkstoff basiert. Insbesondere können aber vor allem Nickel-Titan Legierungen, Titan-Tantal Legierungen oder Cobalt basierte Legierungen zum Einsatz kommen. Das Elastomer auf der Oberfläche des Eisenwerkstoffes undloder des Kupferwerkstoffes bewirkt dabei mit weiterem Vorteil einen Korrosionsschutz der Formgedächtnislegierung.

Die Erfindung richtet sich weiterhin auf ein Verfahren zur Herstellung eines thermisch wirksamen Aktors nach einem der vorgenannten Ansprüche, wobei das Verfahren wenigstens die folgenden Schritte aufweist: Bereitstellen eines Aktorelementes aus einer metallischen Formgedächtnislegierung mit einer antrainierten Gestalt, Erzeugen einer Gestaltänderung des Aktorelementes durch das Aufbringen einer Kraft auf das Aktorelement unterhalb der Austenitstarttemperatur (As) und Erzeugen einer Schicht aus einem Elastomer auf wenigstens einer Teiloberfläche des Aktorelementes zur Bildung eines Rückstellmittels, wobei die Schicht eine Schichtdicke von 5µm bis 800µm aufweist und die Dicke des Aktorelementes das Zweifache bis Zehnfache der Schichtdicke beträgt.

Ist der thermisch wirksame Aktor mit dem erfindungsgemäßen Verfahren hergestellt, kann das Aktorelement beliebig oft von einer antrainierten ersten Gestalt in eine zweite Gestalt zu überführt werden. Diese Überführung erfolgt insbesondere durch eine Abkühlung, und die Gestaltänderung wird bewirkt durch das elastische Verhalten der Schicht aus dem Elastomer. Wird das Aktorelement erwärmt, so nimmt dieses wieder die antrainierte Form an, und beim Überführen der zweiten Gestalt zurück in die erste Gestalt des Aktorelementes wird wieder eine elastische Spannung im Elastomer aufgebaut, sodass bei einer erneuten Abkühlung die zweite Gestalt wieder angenommen werden kann, was bewirkt wird durch die elastische Rückstellkraft der Schicht aus dem Elastomer.

Die Schicht aus dem Elastomer ist insbesondere auf die Oberfläche des Aktorelementes mit einem Sprühverfahren unter Verwendung einer Sprüheinrichtung oder mit einem Tauchverfahren aufgebracht worden. Dadurch ergeben sich sehr einfache Verbindungsmöglichkeiten des Rückstellmittels mit dem Aktorelement, und durch die unmittelbare Anordnung des Rückstellmittels als Schicht auf der Oberfläche des Aktorelementes umfasst der thermisch wirksame Aktor lediglich ein einzelnes Bauteil.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine Ansicht mehrerer Schritte a) bis e) zur Bildung eines thermisch wirksamen Aktors gemäß der Erfindung,
- Figur 2: Ansichten eines thermisch wirksamen Aktors a) als Draht und b) als Flächenelement und
- Figur 3: eine Ansicht eines Verfahrensbeispiels zur Aufbringung der Schicht zur Bildung des Rückstellmittels aus einem Elastomer.

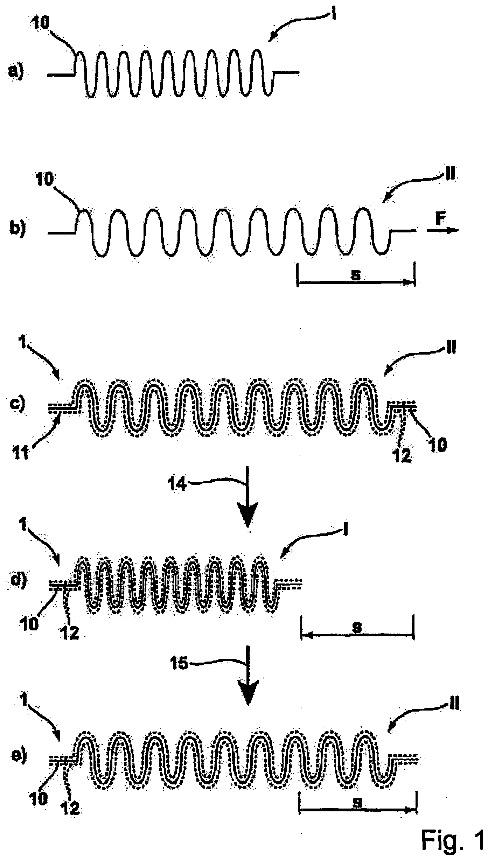

In Figur 1 ist unter a) ein Aktorelement 10 in Form einer Feder gezeigt, und das Aktorelement 10 befindet sich im Zustand einer ersten Gestalt I, und die erste Gestalt I entspricht der Gestalt, die dem Aktorelement 10 antrainiert wurde. Die antrainierte Gestalt ist diejenige Gestalt, die das Aktorelement 10 bei einer entsprechenden Erwärmung einnimmt.

Unter b) ist das Aktorelement 10 unter Beaufschlagung einer Kraft F gezeigt, und das als Feder ausgebildete Aktorelement 10 weist eine Längung um den Weg s auf, wobei die Längung hervorgerufen wurde durch die Beaufschlagung mit der Kraft F. Dieser Zustand des Aktorelementes 10 betrifft dabei die zweite Gestalt II, aus der das Aktorelement 10 beispielsweise in die erste Gestalt I rückführbar wäre durch eine entsprechende Wärmezufuhr.

Unter c) ist dargestellt, dass das Aktorelement 10 unter Beibehaltung der zweiten Gestalt II mit einer Schicht 12 aus einem Elastomer beschichtet wird, und die Schicht 12 aus dem Elastomer bildet erfindungsgemäß ein Rückstellmittel 11. Beispielsweise kann die Schicht 12 durch ein Sprühverfahren oder ein Tauchverfahren auf das drahtförmige Aktorelement 10 aufgebracht werden. Anschließend erfolgt eine Wärmezufuhr 14, sodass das Aktorelement 10 mit dem Elastomer der Schicht 12 erwärmt wird.

Das unter c) gezeigte Aktorelement 10 bildet somit einen thermisch wirksamen Aktor 1, der, wie in den nachfolgenden Teilansichten d) und e) gezeigt, als Aktor 1 mit einem Zweiwege-Effekt eingesetzt werden kann.

Unter d) ist das Aktorelement 10 in der ersten Gestalt I gezeigt, nachdem eine Wärmezufuhr 14 das Aktorelement 10 des thermisch wirksamen Aktors 1 erwärmt hat. Entgegen der elastischen Kraft der Schicht 12 gelangt das Aktorelement 10 zurück von der zweiten Gestalt II in die erste Gestalt I, und legt damit den Weg s im Wesentlichen wieder zurück, indem sich das Federelement wieder verkürzt. In dem unter d) gezeigten Zustand befindet sich das Aktorelement 10 in der antrainierten Gestalt, während die Schicht 12 mit dem Elastomer unter elastische Rückstellspannung gesetzt ist.

Kühlt das Aktorelement 10 unter Wärmeabfuhr 15 wieder ab, so verliert das Aktorelement 10 seine Haltekraft in der ersten Gestalt 1 und die Schicht 12 aus Elastomer sorgt für eine Längung um den Weg s und das Federelement nimmt wieder nahezu die zweite Gestalt II an. Erst bei einer erneuten Wärmezufuhr kann der Aktor 1 wieder in die erste Gestalt I zurückgeführt werden.

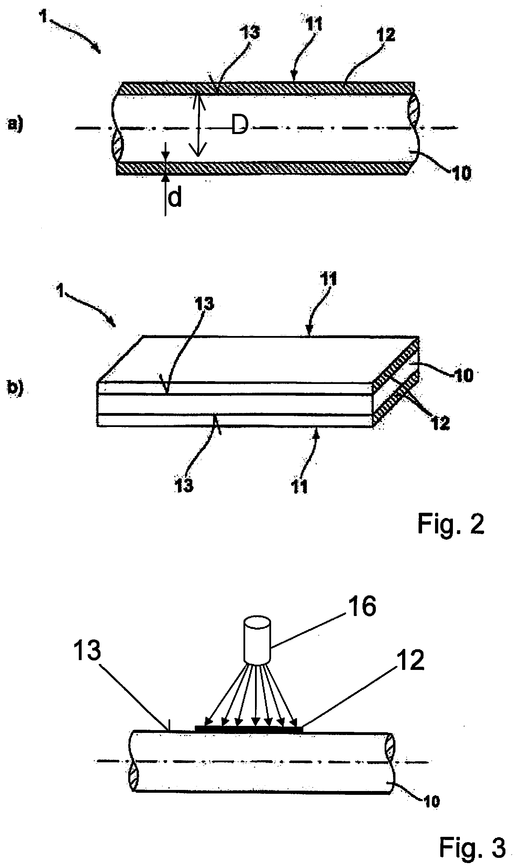

Figur 2 zeigt unter a) ein Ausführungsbeispiel eines thermisch wirksamen Aktors 1 mit einem Aktorelement 10 in Form eines Drahtes mit einem runden Querschnitt, und auf der Oberfläche 13 des Aktorelementes 10 ist zur Bildung eines Rückstellmittels 11 eine Schicht 12 aus einem Elastomer aufgebracht. Erfolgt ein pseudo-plastisches Verformen des Aktorelementes 10, so erzeugt die Verformung in der Schicht 12 eine elastische Spannung, und die Schicht 12 umfasst ein Elastomer, insbesondere ein Silikon.

Die Figur zeigt unter b) ein alternatives Ausführungsbeispiel eines Aktorelementes 10 als Flächenkörper, beispielsweise als Blechelement. Die beiden Oberflächen 13 des Aktorelementes 10 sind mit dem Rückstellmittel 11 versehen, indem auf die Oberflächen 13 Schichten 12 aus einem Elastomer aufgebracht sind. Somit kann auch mit einem flächenförmigen Aktorelement 10 ein thermisch wirksamer Aktor 1 gebildet werden.

Schließlich zeigt Figur 3 ein Beispiel eines Beschichtungsverfahrens zur Aufbringung der Schicht 12 auf die Oberfläche 13 des Aktorelementes 10 mittels eines Sprühverfahrens. Hierfür wird das Aktorelement 10, beispielsweise ausgeführt als ein Draht bzw. Endlosdraht, an einer Sprüheinrichtung 16 kontinuierlich vorbeigeführt, und aus der ein in einem sprühfähigen Zustand vorgehaltenes Elastomer, beispielsweise ein Silikon, austritt und auf die Oberfläche 13 des Aktorelementes 10 in der gezeigten Drahtform gelangt und an dieser haften bleibt, sich also niederschlägt. Die resultierende Schichtdicke beträgt ca. 50µm bis 100µm, beispielsweise 70µm.

Überraschenderweise konnte beispielhaft bei einem Drahtdurchmesser des drahtförmigen Aktorelementes von 200µm und einer nur 70µm dicken Schicht 12 aus Silikon festgestellt werden, dass beide Gestaltänderungen sowohl in eine erste Gestalt als auch in eine zweite Gestalt intrinsisch wirken können und wobei die Gestaltänderungen hohe Umformgrade aufwiesen. Das gleiche überraschend gute Ergebnis wurde bei einem Blechstreifen erreicht, der aus einer Formgedächtnislegierung gebildet wurde und das Aktorelement darstellt.

### Bezugszeichenliste:

- 1: thermisch wirksamer Aktor

- 10: Aktorelement
- 11: Rückstellmittel
- 12: Schicht
- 13: Oberfläche
- 14: Wärmezufuhr
- 15: Wärmeabfuhr
- 16: Sprüheinrichtung

- I: erste Gestalt
- II: zweite Gestalt

- F: Kraft
- s: Weg

## Patentansprüche

1. Thermisch wirksamer Aktor (1) mit einem Aktorelement (10) aus einer metallischen Formgedächtnislegierung, sodass das Aktorelement (10) bei einer Temperaturänderung eine Gestaltänderung ausführt, und wobei wenigstens ein Rückstellmittel (11) aus einem Elastomer vorgesehen ist, mit dem die Gestaltänderung rückstellbar ist, wobei das Rückstellmittel (11) mit dem Aktorelement (10) über einen Oberflächenkontakt verbunden ist,
**dadurch gekennzeichnet,**
**dass** das Rückstellmittel (11) als eine Oberflächenbeschichtung des Aktorelementes (10) ausgeführt ist und eine Schichtdicke (d) von 5µm bis 800µm aufweist, wobei die Dicke (D) des Aktorelementes (10) das Zweifache bis Zehnfache der Schichtdicke (d) beträgt.

2. Thermisch wirksamer Aktor (1) nach Anspruch 1,
**dadurch gekennzeichnet,**
**dass** die Schichtdicke (d) 20µm bis 500µm oder 30µm bis 250µm oder 40µm bis 150µm oder 50µm bis 100µm oder 60µm bis 80µm beträgt.

3. Thermisch wirksamer Aktor (1) nach Anspruch 1,
**dadurch gekennzeichnet,**
**dass** die Schichtdicke (d) 65µm bis 75µm oder 70µm beträgt.

4. Thermisch wirksamer Aktor (1) nach einem der Ansprüche 1 bis 3,
**dadurch gekennzeichnet,**
**dass** das Aktorelement (10) einen Draht aus einer Formgedächtnislegierung bildet, wobei der Draht mit dem Elastomer vollumfänglich beschichtet ist.

5. Thermisch wirksamer Aktor (1) nach einem der Ansprüche 1 bis 3,
**dadurch gekennzeichnet,**
**dass** das Aktorelement (10) ein Blechelement ist, wobei das Elastomer auf wenigstens einer Oberfläche (13) aufgebracht ist.

6. Thermisch wirksamer Aktor (1) nach einem der vorgenannten Ansprüche,
**dadurch gekennzeichnet,**
**dass** das Elastomer ein Silikon ist.

7. Thermisch wirksamer Aktor (1) nach einem der vorgenannten Ansprüche,
**dadurch gekennzeichnet,**
**dass** das Aktorelement (10) eine auf einem Kobaltwerkstoff, einem Titanwerkstoff, einem Nickel-Titan Werkstoff, einem Titan-Tantal Werkstoff, einem Eisenwerkstoff und/oder auf einem Kupferwerkstoff basierende Formgedächtnislegierung aufweist.

8. Verfahren zur Herstellung eines thermisch wirksamen Aktors (1) nach einem der vorgenannten Ansprüche, aufweisend wenigstens die folgenden Schritte:
- Bereitstellen eines Aktorelementes (10) aus einer metallischen Formgedächtnislegierung mit einer antrainierten Gestalt,
- Erzeugen einer Gestaltänderung des Aktorelementes (10) durch das Aufbringen einer Kraft (F) auf das Aktorelement (10) unterhalb der Austenitstarttemperatur und
- Erzeugen einer Schicht (12) aus einem Elastomer auf wenigstens einer Teiloberfläche des Aktorelementes (10) zur Bildung eines Rückstellmittels (11), wobei die Schicht (12) eine Schichtdicke (d) von 5µm bis 800µm aufweist und die Dicke (D) des Aktorelementes (10) das Zweifache bis Zehnfache der Schichtdicke (d) beträgt.

9. Verfahren nach Anspruch 8,
**dadurch gekennzeichnet,**
**dass** die Schicht (12) aus dem Elastomer auf der Oberfläche des Aktorelementes (10) mit einem Streichverfahren oder mit einem Tauchverfahren aufgebracht wird.

10. Verfahren nach Anspruch 8,
**dadurch gekennzeichnet,**
**dass** die Schicht (12) aus dem Elastomer auf der Oberfläche des Aktorelementes (10) mittels einer Sprüheinrichtung (16) im Sprühverfahren aufgebracht und anschließend ausgehärtet wird.

## Claims

1. A thermally active actuator (1) having an actuator element (10) composed of a metallic shape memory alloy such that the actuator element (10) executes a shape change on a temperature change and wherein at least one restoring means (11) composed of an elastomer is provided by which the shape change can be restore, with the restoring means (11) being connected to the actuator element (10) via a surface contact,
**characterized in that**
the restoring means (11) is designed as a surface coating of the actuator element (10) and has a layer thickness (d) of 5 µm to 800 µm, with the thickness (D) of the actuator element (10) amounting to two to ten times the layer thickness (d).

2. A thermally active actuator (1) in accordance with claim 1,
**characterized in that**
the layer thickness (d) amounts to 20 µm to 500 µm or 30 µm to 250 µm or 40 µm to 150 µm or 50 µm to 100 µm or 60 µm to 80 µm.

3. A thermally active actuator (1) in accordance with claim 1,
**characterized in that**
the layer thickness (d) amounts to 65 µm to 75 µm and/or 70 µm.

4. A thermally active actuator (1) in accordance with one of the claims 1 to 3,
**characterized in that**
the actuator element (10) forms a wire of a memory shape alloy with
the wire being coated by the elastomer over its full circumference.

5. A thermally active actuator (1) in accordance with one of the claims 1 to 3,
**characterized in that**
the actuator element (10) is a sheet metal element, with the elastomer being applied to at least one surface (13).

6. A thermally active actuator (1) in accordance with one of the preceding claims,
**characterized in that**
the elastomer is a silicone.

7. A thermally active actuator (1) in accordance with one of the preceding claims,
**characterized in that**
the actuator element (10) comprises a shape memory alloy based on a cobalt material, a titanium material, a nickel-titanium material, a titanium - tantalum material, an iron material, and/or on a copper material.

8. A method of manufacturing a thermally active actuator (1) in accordance with one of the preceding claims, said method comprising at least the following steps:
- providing an actuator element (10) of a metallic shape memory alloy having a trained shape;
- generating a shape change of the actuator element (10) by the application of a force (F) to the actuator element (10); and
- generating a layer (12) of an elastomer on at least one partial surface of the actuator element (10) to form a restoring means (11), with the layer (12) having a layer thickness (d) of 5 µm to 800 µm and the thickness (D) of the actuator element (10) amounting to two to ten times the layer thickness (d).

9. A method in accordance with claim 8,
**characterized in that**
the layer (12) of the elastomer is applied to the surface of the actuator element (10) by a brushing process or a dipping process.

10. A method in accordance with claim 8,
**characterized in that**
the layer (12) of the elastomer is applied to the surface of the actuator element (10) by means of a spray device (16) in a spray process and is subsequently hardened.

## Revendications

1. Actionneur thermiquement actif (1) doté d'un élément actionneur (10) composé d'un alliage métallique à mémoire de forme, de telle sorte que l'élément actionneur (10) réalise une modification de forme lors d'une modification de température, et dans lequel au moins un moyen de rappel (11) en élastomère est prévu, au moyen duquel la modification de forme peut être annulée, le moyen de rappel (11) étant relié à l'élément actionneur (10) par le biais d'un contact de surface,
**caractérisé en ce que**
le moyen de rappel (11) est réalisé sous la forme d'un revêtement de surface de l'élément actionneur (10) et présente une épaisseur de couche (d) de 5 µm à 800 µm, l'épaisseur (D) de l'élément actionneur (10) étant égale à deux à dix fois l'épaisseur de couche (d).

2. Actionneur thermiquement actif (1) selon la revendication 1,
**caractérisé en ce que**
l'épaisseur de couche (d) est de 20 µm à 500 µm ou 30 µm à 250 µm ou 40 µm à 150 µm ou 50 µm à 100 µm ou 60 µm à 80 µm.

3. Actionneur thermiquement actif (1) selon la revendication 1,
**caractérisé en ce que**
l'épaisseur de couche (d) est de 65 µm à 75 µm ou 70 µm.

4. Actionneur thermiquement actif (1) selon l'une des revendications 1 à 3,
**caractérisé en ce que**
l'élément actionneur (10) forme un fil composé d'un alliage à mémoire de forme, le fil étant revêtu de l'élastomère sur toute sa périphérie.

5. Actionneur thermiquement actif (1) selon l'une des revendications 1 à 3,
**caractérisé en ce que**
l'élément actionneur (10) est un élément de tôle, l'élastomère étant appliqué sur au moins une surface (13).

6. Actionneur thermiquement actif (1) selon l'une des revendications précédentes,
**caractérisé en ce que**
l'élastomère est un silicone.

7. Actionneur thermiquement actif (1) selon l'une des revendications précédentes,
**caractérisé en ce que**
l'élément actionneur (10) présente un alliage à mémoire de forme à base d'un matériau de cobalt, un matériau de titane, un matériau de nickel-titane, un matériau de titane-tantale, un matériau de fer et/ou un matériau de cuivre.

8. Procédé de fabrication d'un actionneur thermiquement actif (1) selon l'une des revendications précédentes, comportant au moins les étapes suivantes :
- mise à disposition d'un élément actionneur (10) composé d'un alliage métallique à mémoire de forme ayant une forme apprise,
- génération d'une modification de forme de l'élément actionneur (10) par l'application d'une force (F) sur l'élément actionneur (10) en dessous de la température de début de transformation austénitique et
- génération d'une couche (12) en élastomère sur au moins une surface partielle de l'élément actionneur (10) pour former un moyen de rappel (11), la couche (12) présentant une épaisseur de couche (d) de 5 µm à 800 µm et l'épaisseur (D) de l'élément actionneur (10) étant égale à deux à dix fois l'épaisseur de couche (d).

9. Procédé selon la revendication 8,
**caractérisé en ce que**
la couche (12) en élastomère est appliquée sur la surface de l'élément actionneur (10) avec un procédé d'enduction ou avec un procédé d'immersion.

10. Procédé selon la revendication 8,
**caractérisé en ce que**
la couche (12) en élastomère est appliquée sur la surface de l'élément actionneur (10) au moyen d'un dispositif de pulvérisation (16) dans un procédé de pulvérisation, puis elle est durcie.
